**Europäisches Patentamt**

**European Patent Office**

**Office européen des brevets**

(19)

(11) Veröffentlichungsnummer : **0 563 058 B1**

(12)

# EUROPÄISCHE PATENTSCHRIFT

(45) Veröffentlichungstag der Patentschrift :
**01.06.94 Patentblatt 94/22**

(51) Int. Cl.⁵ : **G01B 11/02**

(21) Anmeldenummer : **91919994.3**

(22) Anmeldetag : **19.11.91**

(86) Internationale Anmeldenummer :
**PCT/DE91/00920**

(87) Internationale Veröffentlichungsnummer :
**WO 92/11507 09.07.92 Gazette 92/17**

(54) **VERFAHREN UND LAGEGEBER ZUR LAGEBESTIMMUNG EINES POSITIONIERKÖRPERS RELATIV ZU EINEM BEZUGSKÖRPER.**

(30) Priorität : **17.12.90 DE 4040794**

(43) Veröffentlichungstag der Anmeldung :
**06.10.93 Patentblatt 93/40**

(45) Bekanntmachung des Hinweises auf die
Patenterteilung :
**01.06.94 Patentblatt 94/22**

(84) Benannte Vertragsstaaten :
**AT BE CH DE FR GB IT LI**

(56) Entgegenhaltungen :
**EP-A- 0 104 762**
**EP-A- 0 135 673**

(56) Entgegenhaltungen :
**DE-A- 3 840 726**
**US-A- 4 626 100**
**Patent Abstracts of Japan, vol. 11, no. 261**
**(P-609), 25 August 1987 & JP-A-62066104**

(73) Patentinhaber : **E.M.S. TECHNIK GMBH**
**Sägemühlenstrasse 89**
**D-26789 Leer (DE)**

(72) Erfinder : **KELLNER, Helmut**
**Auf der Kave 50**
**D-2956 Moormerland (DE)**

(74) Vertreter : **Patentanwälte Thömen & Körner**
**Zeppelinstrasse 5**
**D-30175 Hannover (DE)**

## Beschreibung

Die Erfindung betrifft ein Verfahren zur Lagebestimmung eines Positionierkörpers relativ zu einem Bezugskörper nach dem Oberbegriff des Anspruchs 1.

Ein solches Verfahren dient z.B. dazu, bei der Steuerung von Meß- und Fertigungsmaschinen Wegstrecken zwischen längsverschieblichen Gegenständen, wie Meßköpfen, Greif- oder Montagearmen zu erfassen. Dabei ist die Genauigkeit, mit der diese Wegstrecken ermittelt werden können, von ausschlaggebenden Bedeutung für die Fertigungsgenauigkeit des Automaten.

Aus der DE-OS 39 09 856 ist bereits ein Verfahren bekannt, das eine hohe Meßgenauigkeit unabhängig von einer exakten Führung des Abtasters ermöglicht. Dabei werden von einem Abtaster drei Marken eines Maßstabes ausgewertet. Bei zwei Marken wäre dazwischen einem Abtasterortspunkt und diesen Marken gebildete Projektionswinkel noch davon abhängig, in welchem Abstand sich der Abtasterortspunkt über den Marken befindet und wie weit er seitlich versetzt ist. Bei drei Marken gelingt es, über den weiteren Projektionswinkel zwischen dem Abtasterortspunkt, dieser weiteren Marke und einer der anderen Marken den Abtasterortspunkt exakt zu bestimmen. Für eine Kombination von zwei Kombinationswinkeln existiert nämlich nur ein einziger Ort, auf dem sich der Abtasterortspunkt befinden kann.

Der Erfindung liegt die Aufgabe zugrunde, die Voraussetzung dafür zu schaffen, daß außer Messungen der Position auf einer Maßstabsachse und senkrecht dazu weitere Lageparameter zwischen einem Positionierkörper relativ zu einem Bezugskörper erfaßt werden können.

Diese Aufgabe wird bei dem im Oberbegriff des Anspruchs 1 beschriebenen Verfahren durch die im Kennzeichen angegebenen Merkmale gelöst.

Zu solche Lageparameter zählen eine weitere Koordinatenrichtung und/oder Neigungen oder Neigungswinkeln um eine oder mehrere Koordinatenachsen. Die Erfindung beruht auf der Überlegung, daß es durch Auswertung zweier Projektionswinkel möglich ist den Abstand zwischen einem Abtasterortspunkt und dem Maßstab zu bestimmen. Wird diese Abstandsmessung nun an zwei verschiedenen Orten durchgeführt, so kann unter Berücksichtigung der gegenseitigen Ausrichtung der optischen Achsen eine weitere Koordinatenrichtung ausgewertet werden und unter Berücksichtigung des gegenseitigen Abstandes der Abtasterortspunkte auf die Neigung des Maßstabes zu einer durch die beiden Abtasterortspunkte verlaufenden Geraden geschlossen werden.

Aufgrund dieser Überlegung ist es nun möglich, jeden beliebigen Neigungswinkel um eine Koordinatenachse zu bestimmen. Wenn der Winkel um nur eine Koordinatenachse ausgewertet werden soll, reicht es aus, auf einem senkrecht zu dieser Koordinatenachse angeordneten Maßstab die Abstände zwischen dem Maßstab und zwei Abtasterortspunkten zu bestimmen. Bei Neigungswinkeln in zwei Koordinatenrichtungen werden entsprechend die Abstände zwischen zwei Maßstäben und jeweils zwei Abtasterortspunkten bestimmt. Auch eine Erweiterung der Abstandsmessung in drei Koordinatenrichtungen ist möglich, wodurch dann alle drei Neigungswinkel um die Koordinatenrichtungen erfaßt werden können.

Eine vereinfachte Ausführung sieht vor, daß die auszuwertenden Marken und Projektionswinkel von Abtastern mit gleich ausgerichteten optischen Achsen bestimmt werden. Dabei können diese Marken und Projektionswinkel von insgesamt zwei Abtastern ausgewertet werden, die beide demselben Maßstab zugeordnet sind.

Hierdurch lassen sich neben den Koordinaten zweier Koordinatenachsen auch der Neigungswinkel um eine dritte Koordinatenachse ermitteln.

Eine andere vereinfachte Ausführung sieht vor, daß die auf einem weiteren, zum ersten Maßstab parallel ausgerichteten Maßstab befindlichen Marken ausgewertet werden. Die Marken und Projektionswinkel können von insgesamt zwei Abtastern ausgewertet werden, von denen jeder einem Maßstab zugeordnet ist.

Diese Ausführung ermöglicht es, sowohl die Koordinaten zweier Koordinatenachsen als auch die Neigungswinkel um eine dieser Koordinatenachsen und eine dritte Koordinatenachse zu bestimmen.

Wird zusätzlich ein weiterer Abtaster verwendet, der einem dieser Maßstäbe zugeordnet wird, so lassen sich neben den Koordinaten zweier Koordinatenachsen die Neigungswinkel um alle drei Koordinatenachsen bestimmen.

Bei einer weiteren Ausgestaltung mit ebenfalls zwei Maßstäben sind diese unter einem Winkel von vorzugsweise 90 Grad angeordnet. Jedem dieser Maßstäbe kann ein Abtaster zugeordnet werden.

Mit dieser Ausgestaltung gelingt es, lediglich die Koordinaten aller drei Koordinatenachsen zu bestimmen.

Durch Zuordnung eines weiteren Abtasters zu einem der Maßstäbe kann zusätzlich der Neigungswinkel um eine Koordinatenachse bestimmt werden.

Eine Weiterbildung sieht vor, daß jedem Maßstab zwei Abtaster zugeordnet werden.

Dadurch wird die Bestimmbarkeit der Koordinaten aller drei Koordinatenachsen und der Neigungswinkel um zwei Koordinatenachsen erreicht.

Eine weitere Verbesserung der Meßmöglichkeiten ergibt sich, wenn die auf einem zweiten, zum ersten Maßstab parallel ausgerichteten Maßstab befindlichen Marken und die auf einem dritten, unter einem Winkel von vorzugsweise 90 Grad zum ersten Maßstab ausgerichteten Maßstab befindlichen Marken ausgewertet werden.

So bietet eine Anordnung von insgesamt drei Abtastern, von denen jeder einem Maßstab zugeordnet ist und deren optische Achsen in einer Ebene liegen, die Möglichkeit, die Koordinaten aller Koordinatenrichtungen und den Neigungswinkel um zwei Koordinatenachsen zu bestimmen.

Durch Zuordnung eines vierten Abtasters zu einem der parallelen Maßstäbe können nicht nur die Koordinaten aller drei Koordinatenachsen, sondern auch die Neigungswinkel um alle drei Koordinatenachsen bestimmt werden.

Bei dieser Ausführung können die Lageparameter wie folgt bestimmt werden:

$$X_{01} = \frac{\Delta_1 * (Z1_1^2 - Z2_1^2)}{(Z1_1 - Z2_1)^2 + \Delta_1^2}$$

$$X_{03} = \frac{\Delta_3 * (Z1_3^2 - Z2_3^2)}{(Z1_3 - Z2_3)^2 + \Delta_3^2}$$

$$X_{05} = \frac{\Delta_5 * (Z1_5^2 - Z2_5^2)}{(Z1_5 - Z2_5)^2 + \Delta_5^2}$$

$$Y_{01} = \frac{\Delta_1^2 * (Z1_1 + Z2_1)}{(Z1_1 - Z2_1)^2 + \Delta_1^2}$$

$$Z_{03} = \frac{\Delta_3^2 * (Z1_3 + Z2_3)}{(Z1_3 - Z2_3)^2 + \Delta_3^2}$$

$$Z_{04} = \frac{\Delta_4^2 * (Z1_4 + Z2_4)}{(Z1_4 - Z2_4)^2 + \Delta_4^2}$$

$$Z_{05} = \frac{\Delta_5^2 * (Z1_5 + Z2_5)}{(Z1_5 - Z2_5)^2 + \Delta_5^2}$$

$$f = \arctan \frac{Z_{04} - Z_{03}}{\delta_{43}}$$

$$æ = \arctan \frac{X_{05} - X_{03}}{\delta_{53}}$$

$$\omega = \arctan \frac{Z_{05} - Z_{03}}{\delta_{53}}$$

wobei die Indizes 1, 3, 4, 5 für den ersten, dritten, vierten und fünften Abtaster stehen, wobei

$$Z1_{1\ldots5} = \frac{\Delta 1\ldots5}{2 * \tan \alpha_{1\ldots5}}$$

und

$$Z2_{1\ldots5} = \frac{\Delta 1\ldots5}{2 * \tan \beta_{1\ldots5}}$$

sind, $\alpha$ den Projektionswinkel zwischen dem Abtasterortspunkt sowie einer ersten und einer zweiten Marke, $\beta$ den Projektionswinkel zwischen dem Abtasterortspunkt und der ersten oder zweiten sowie einer dritten Marke bezeichnet, $\Delta$ der Abstand zwischen zwei Marken ist, $X_{01\ldots5}$, $Y_{01}$ und $Z_{03\ldots5}$ die Koordinaten der Abtasterortspunkte der durch die Indizes angegebenen Abtaster relativ zum Maßstab sind, $f$ den Winkel um die Y-Achse, $æ$ den Winkel um die Z-Achse, $\omega$ den Winkel um die X-Achse darstellen und $\delta$ den Abstand zwischen den Abtasterortspunkten der durch die Indizes angegebenen Abtaster bildet.

Eine bevorzugte Ausgestaltung sieht vor, daß die auszuwertenden Marken und Projektionswinkel von insgesamt fünf Abtastern ausgewertet werden, von denen der erste und zweite, der dritte und vierte sowie der dritte und fünfte mit ihren optischen Achsen gleich und der erste und zweite gegenüber dem dritten, vierten und fünften mit ihren optischen Achsen in einem Winkel von vorzugsweise 90 Grad ausgerichtet sind und von denen die Abtaster, deren optischen Achsen in einem Winkel ausgerichtet sind, jeweils in einer Ebene liegen, und daß ein dritter Maßstab vorgesehen ist, der parallel zum ersten oder zum zweiten Maßstab ausgerichtet ist.

Es wird bei dieser Ausgestaltung eine umfassende Bestimmung der Positionen aller Koordinatenrichtungen und der Neigungswinkel um alle Koordinatenachsen erzielt. Dadurch gelingt es, die Koordinatenpositionen in Richtung aller Achsen eines Koordinatensystems auch dann exakt zu bestimmen, wenn Längsverschiebungen gleichzeitig von Neigungsbewegungen überlagert sind.

Bei der letzteren Ausgestaltung können die Lageparameter wie folgt bestimmt werden:

$$X_{01} = \frac{\Delta_1 * (Z1_1^2 - Z2_1^2)}{(Z1_1 - Z2_1)^2 + \Delta_1^2}$$

$$Y_{01} = \frac{\Delta_1^2 * (Z1_1 + Z2_1)}{(Z1_1 - Z2_1)^2 + \Delta_1^2}$$

$$Y_{02} = \frac{\Delta_2^2 * (Z1_2 + Z2_2)}{(Z1_2 - Z2_2)^2 + \Delta_2^2}$$

$$Z_{03} = \frac{\Delta_3^2 * (Z1_3 + Z2_3)}{(Z1_3 - Z2_3)^2 + \Delta_3^2}$$

$$Z_{04} = \frac{\Delta_4^2 * (Z1_4 + Z2_4)}{(Z1_4 - Z2_4)^2 + \Delta_4^2}$$

$$Z_{05} = \frac{\Delta_5^2 * (Z1_5 + Z2_5)}{(Z1_5 - Z2_5)^2 + \Delta_5^2}$$

$$f = \arctan \frac{Z_{04} - Z_{03}}{\delta_{43}}$$

$$\text{æ} = \arctan \frac{Y_{02} - Y_{01}}{\delta_{21}}$$

$$\omega = \arctan \frac{Z_{05} - Z_{03}}{\delta_{53}}$$

wobei die Indizes 1, 2, 3, 4, 5 für den ersten, zweiten, dritten, vierten und fünften Abtaster stehen, wobei

$$Z1_{1...5} = \frac{\Delta 1...5}{2 * \tan \alpha_{1...5}}$$

und

$$Z2_{1...5} = \frac{\Delta 1...5}{2 * \tan \beta_{1...5}}$$

sind, $\alpha$ den Projektionswinkel zwischen dem Abtasterortspunkt sowie einer ersten und einer zweiten Marke, $\beta$ den Projektionswinkel zwischen dem Abtasterortspunkt und der ersten oder zweiten sowie einer dritten Marke bezeichnet, $\Delta$ der Abstand zwischen zwei Marken ist, $X_{01}$, $Y_{01...3}$ und $Z_{03...5}$ die Koordinaten der Abtasterortspunkte der durch die Indizes angegebenen Abtaster relativ zum Maßstab sind, $f$ den Winkel um die Y-Achse, æ den Winkel um die Z-Achse, $\omega$ den Winkel um die X-Achse darstellen und $\delta$ den Abstand zwischen den Abtasterortspunkten der durch die Indizes angegebenen Abtaster bildet.

Da in jeder Koordinatenrichtung jeweils zwei Abtasterortspunkte liegen, können über die Tangensfunktion bzw. die Arcustangensfunktion die Differenzen der Abstände vom Maßstab auch die Neigungswinkel um die dazu jeweils senkrecht stehende Koordinatenachse ermittelt werden. Bei Längsverschiebungen in eine oder mehrere Koordinatenrichtungen sind die von jedem Abtaster für dieselbe Koordinatenrichtung ermittelten Wege gleich, so daß man sich auf die Angaben jeweils eines Abtasters beschränken kann.

Bei einer praktischen Ausführung werden die Projektionswinkel durch optische Abbildung der Marken auf einer Projektionsfläche und Abstandsmessung der Projektionsorte gewonnen. Als Abtasterortspunkt wird das Projektionszentrum einer Abbildungsoptik gewählt.

Auf diese Weise läßt sich die erforderliche gewünschte Auflösung des Winkels bei vorgegebener Auflösung der Meßsensoren auf der Projektionsfläche durch geeignete Wahl des Abstandes der Projektionsfläche von der Projektionsoptik sowie dessen Brennweite realisieren.

Die Erfindung betrifft ferner einen Lagegeber nach dem Oberbegriff des Anspruchs 18.

Diesbezüglich liegt ihr die Aufgabe zugrunde, einen Lagegeber zu schaffen, der außer Messungen der Position auf einer Maßstabsachse und senkrecht dazu weitere Lageparameter zwischen einem Positionierkörper relativ zu einem Bezugskörper zu erfassen vermag.

Diese Aufgabe wird bei dem im Oberbegriff des Anspruchs 18 beschriebenen Lagegeber durch die im Kennzeichen angegebenen Merkmale gelöst.

Hinsichtlich der Wirkungsweise und der Vorteile der Ausgestaltungen des Lagegebers gelten die Erläuterungen für das Verfahren entsprechend.

Weiterbildungen und vorteilhafte Ausgestaltungen von Verfahren und Lagegeber ergeben sich aus den Ansprüchen, der weiteren Beschreibung und der Zeichnung anhand der die Erfindung näher beschrieben wird.

In der Zeichnung zeigen:

Fig. 1     eine schematische Seitenansicht eines Abtasters über einem Maßstab,

Fig. 2     eine geometrische Darstellung der Projektionswinkel zur Erläuterung der Berechnungsformeln.

Fig. 3     ein Koordinatensystem zur Definition der verwendeten Bezeichnungen und Parameter,

Fig. 4    eine schematische Seitenansicht zweier Abtaster über einem Maßstab,

Fig. 5    eine perspektivische Ansicht eines Positionierkörpers mit Maßstäben und Abtastern zur Erfassung aller räumlichen Parameter und

Fig. 6    eine Sonde zur Abtastung von Konturen als Anwendungsbeispiel der Erfindung.

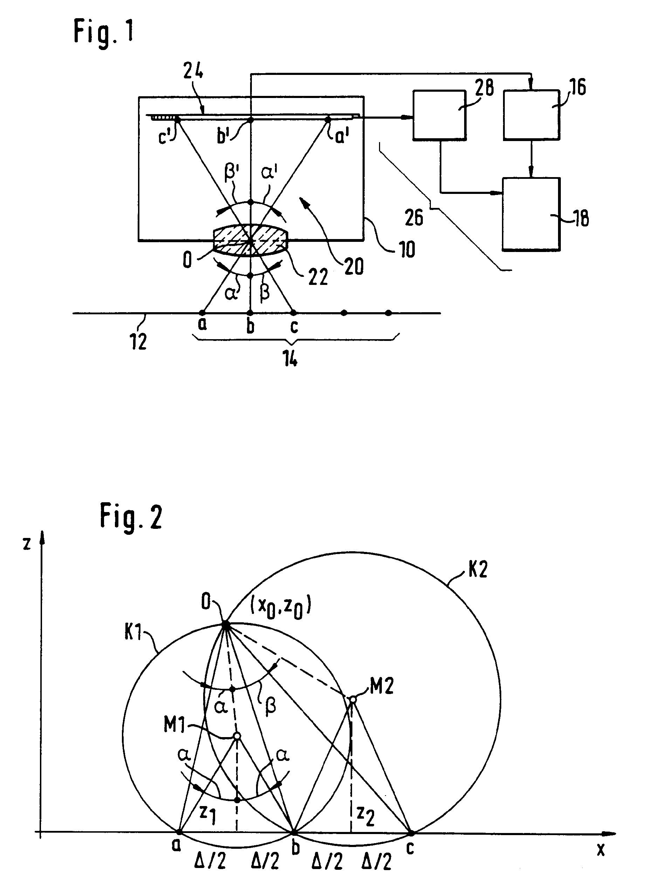

Fig. 1 zeigt einen Abtaster in schematischer Darstellung in Seitenansicht. Dieser umfaßt einen Maßstab 12 mit Marken 14, von denen einzelne Marken hier mit a, b und c bezeichnet sind. Handelt es sich bei dem Maßstab 12 um einen Inkrementalmaßstab, so kann eine grobe Ermittlung der Koordinaten in Längsrichtung des Maßstabes durch Zählen der Marken 14 erfolgen. Bei einer anderen Alternative, bei der ein Absolutmaßstab verwendet wird, beinhalten die Marken durch Kodierung bereits die vollständige grobe Koordinateninformation in Längsrichtung des Maßstabes. Diese Kodierung kann z. B. durch unterschiedliche Strichstärken, gegebenenfalls in Verbindung mit einer binären Darstellungsweise, vorgenommen werden.

Der Abtaster 10 befindet sich oberhalb des Maßstabes 12 und dekodiert die in den Marken 14 verschlüsselten Längeninformationen. Mit Hilfe einer Winkelmeßvorrichtung 20 können Projektionswinkel, die sich zwischen den Marken 14 und einem Abtasterortspunkt des Abtasters 10 ergeben, ermittelt werden.

Der Abtaster 10 ist als optischer Abtaster ausgebildet und umfaßt eine Abbildungsoptik 22 mit einer Projektionsfläche 24 sowie einer Abstandsmeßeinrichtung 26. Bei diesem Abtaster ist ein Abtasterortspunkt O durch das dem Maßstab zugewandte Projektionszentrum der Abbildungsoptik 22 gebildet. Die Projektionsfläche 24 ist durch ein Diodenarray, z. B. in Gestalt einer CCD-Zeile gebildet. Die Anzahl der Pixel ist so gewählt, daß im Falle eines Absolutmaßstabs die Marken 14 in ihrer Breite aufgelöst werden können und mit Hilfe eines Rechners 18 dekodierbar sind.

Im Falle eines Inkrementalmaßstabes dient zur Auswertung der vom Abtaster 10 gelesenen Werte ein Zähler 16 der auch in einem Rechner 18 integriert sein kann, sowie ein weiterer Zähler 28, der ebenfalls in dem Rechner 18 integriert sein kann. Dabei dient der Zähler 16 dazu, die Ereignisse, also die Anzahl der Marken zu zählen, die beim Längsverschieben des Abtasters 10 über den Maßstab 12 passiert werden. Mit Hilfe dieses Zählers 16 und des Rechners 18 ist somit eine grobe Bestimmung der zurückgelegten Wegstrecke möglich, wobei hier die Auflösung bei Anordnung der Marken 14 auf dem Maßstab 12 in einem Abstand $\Delta$ von ca. 1 mm ebenfalls nur in dieser Größenordnung liegt.

Die Interpolation zwischen den Marken 14 wird mittels der Winkelmeßvorrichtung 20 vorgenommen. Wie aus der Zeichnung ersichtlich, werden hier als Beispiel die Marken a, b und c welche zum Abtasterortspunkt O die Winkel $\alpha$ bzw. $\beta$ einnehmen, unter dem Winkel $\alpha'$ und $\beta'$ auf die Punkte a', b' und c' der Projektionsfläche 24 abgebildet.

Dort wird mittels der Abstandsmeßeinrichtung 26 jeweils der Projektionswinkel über die Abstandsmessung der Projektionspunkte a', b' und c' auf der Projektionsfläche 24 ermittelt. Besitzt die Abstandsmeßeinrichtung 26 z.B. eine CCD-Zeile, so werden an den Stellen, an denen die Marken auf dieser Zeile abgebildet werden, Ladungsänderungen bewirkt, die nach seriellem Auslesen von dem Zähler 28 registriert werden und von dem Rechner 18 in entsprechende Winkelwerte $\alpha$ und $\beta$ umgerechnet werden können.

Aus den Projektionswinkeln $\alpha$ und $\beta$ lassen sich unter Anwendung trigonometrischer Funktionen die Koordinaten des Abtasterortspunktes O, der hier mit dem Projektionszentrum in der Abbildungsoptik 22 übereinstimmt, ermitteln. Zur Erläuterung der Rechenschritte wird auf Fig. 2 Bezug genommen, in der aus Fig. 1 nur die Marken a, b, c und der Abtasterortspunkt O übernommen sind. In diesem Fall befindet sich aber der Abtasterortspunkt O nicht direkt über der Marke b, um hier auch zeichnerisch zu veranschaulichen, daß jede beliebige Position des Abtasterortspunktes O bestimmt werden kann.

Zwischen dem Abtasterortspunkt O und den Marken a und b ist der Projektionswinkel $\alpha$ und zwischen dem Abtasterortspunkt O und den Marken b und c der Projektionswinkel $\beta$ eingeschlossen. Die Abstände der Marken a, b und c betragen jeweils $\Delta$. Betrachtet man einmal die Winkel $\alpha$ und $\beta$ für sich, so gibt es verschiedene Punkte, die den gleichen Projektionswinkel $\alpha$ und $\beta$ einnehmen. Diese Punkte befinden sich auf einer Ortskurve, die für den Winkel $\alpha$ durch einen Kreis K 1 und für den Winkel $\beta$ durch einen Kreis K 2 dargestellt sind. Kombiniert man die beiden Winkel $\alpha$ und $\beta$, so gibt es nur einen realen Punkt, bei dem die Bedingung erfüllt ist. Dieser Punkt ist durch die Schnittpunkte der beiden Ortskurven, also der Kreise K 1 und K 2 gegeben.

Die Mittelpunkte M 1 und M 2 der Kreise K 1 und K 2 lassen sich so bestimmen, daß die Mittelsenkrechten zwischen den Marken a und b einerseits und b und c andererseits bestimmt werden und hier die Schnittpunkte mit Linien erhalten werden, welche jeweils unter dem Projektionswinkel, also $\alpha$ oder $\beta$, durch die Marken a und b bzw. b und c laufen.

Für die Abstände der Mittelpunkte M 1 und M 2 von der Maßstabsachse, also die Z-Koordinate der Mittelpunkte M 1 und M 2 ergeben sich:

$$Z1 \ = \ \frac{\Delta}{2 * \tan\alpha}$$

und

$$Z2 = \frac{\Delta}{2 * \tan \beta}$$

Durch mathematische Ableitungen ergeben sich für:

$$X_0 = \frac{\Delta * (Z1^2 - Z2^2)}{(Z1 - Z2)^2 + \Delta^2}$$

und für

$$Z_0 = \frac{\Delta^2 * (Z1 + Z2)}{(Z1 - Z2)^2 + \Delta^2}$$

Diese Gleichungen führen also zu einer eindeutigen Lösung und lassen sich mit üblichen Rechnern innerhalb kürzester Zeit bestimmen. Sie gelten für alle Abtaster A 1...A 5. Um nachfolgend einen Bezug zu dem jeweiligen Abtaster herstellen zu können, sind die Größen in den Gleichungen zusätzlich mit Indizes versehen, die der Ordnungszahl der Abtaster entsprechen, bei fünf Abtastern werden also die Indizes 1, 2, 3, 4 und 5 vergeben.

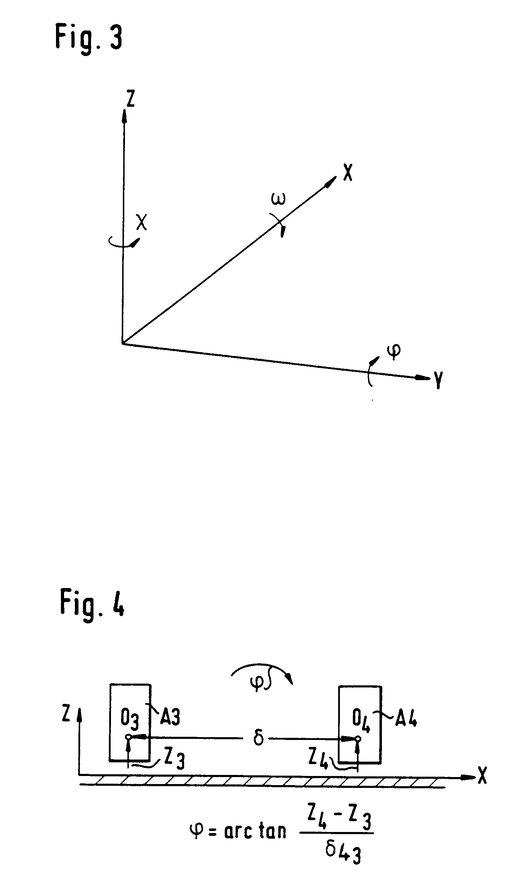

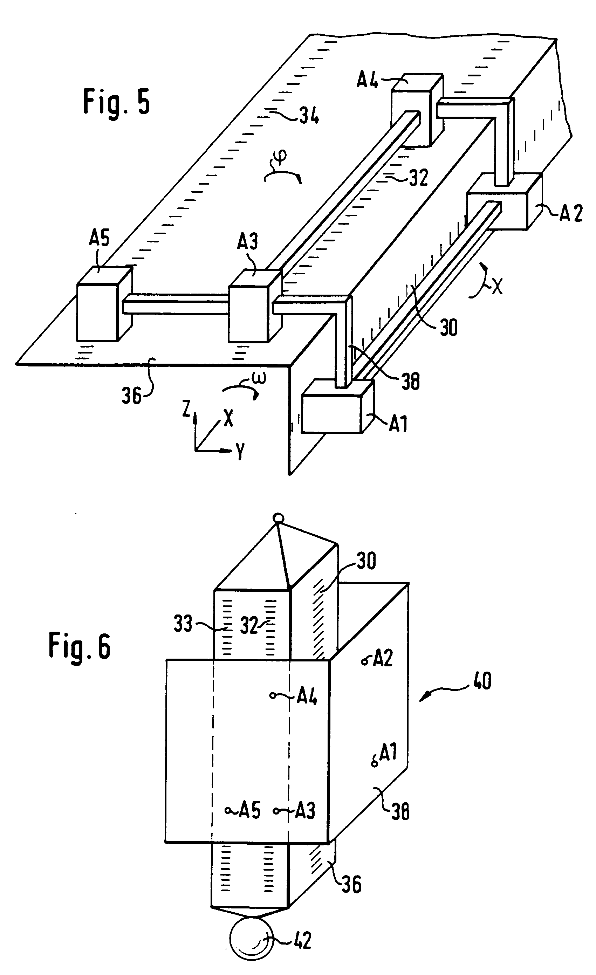

In Fig. 3 ist ein Koordinatensystem zur Definition der verwendeten Bezeichnungen und Parameter dargestellt. Die hier definierten Parameter werden auch in den Figuren 4 und 5 benutzt. Es handelt sich um ein kartesisches Koordinatensystem mit den Koordinatenachsen X, Y und Z. $f$ bezeichnet den Winkel um die Y-Achse, æ den Winkel um die Z-Achse und ω den Winkel um die X-Achse

In Fig. 4 ist eine schematische Seitenansicht zweier Abtaster A 3, A 4 über einem Maßstab 32 dargestellt. Die Abtasterortspunkte $O_3$ und $O_4$ haben einen gegenseitigen Abstand $\delta$. Verläuft eine durch die Abtasterortspunkte führende Gerade parallel zum Maßstab 32, so sind auch die beiden Abstände der Abtasterortspunkte gleich. Bei Abweichungen kann man über die Tangens- oder Arcustangensfunktion in Verbindung mit dem Abstand $\delta$ den Winkel berechnen und zwar nach der allgemeinen Formel:

$$\text{Neigungswinkel} = \arctan \frac{Z_{04} - Z_{03}}{\delta}$$

Auch diese Formel läßt sich für alle Abtasterpaare anwenden, die die gleiche Ausrichtung ihrer optischen Achsen besitzen. Um auch hier einen Bezug zu dem jeweiligen Abtaster herstellen zu können, sind die Größen in den Gleichungen zusätzlich mit Indizes versehen, die der Ordnungszahl der Abtaster entsprechen, bei fünf Abtastern A 1...A 5 werden also die Indizes 1, 2, 3, 4 und 5 vergeben. Beim Abstand $\delta$ bezeichnen die Indizes die Abtasterortspunkte der beteiligten Abtaster des Abtasterpaares, auf die sich der Abstand bezieht.

Fig. 5 zeigt einen Positionierkörper 36 mit drei Maßstäben 30, 32, 34 und fünf Abtastern A 1, A 2, A 3, A 4, A 5 auf einem Bezugskörper 38. Ein erster Maßstab 30 befindet sich auf der Schmalseite des Bezugskörpers 38. Ein zweiter 32 und dritter Maßstab 34 sind auf der Breitseite des Bezugskörpers 38 angeordnet. Die Schmalseite und die Breitseite des Bezugskörpers 38 sind in einem Winkel von 90 Grad ausgerichtet. Über dem ersten Maßstab 30 sind ein erster A 1 und zweiter Abtaster A 2 angeordnet, die mit ihren optischen Achsen gleich ausgerichtet sind und unterschiedliche Bereiche des ersten Maßstabes 30 abtasten. Über dem zweiten Maßstab 32 befinden sich ein dritter A 3 und vierter Abtaster A 4, die ebenfalls mit ihren optischen Achsen gleich ausgerichtet sind und unterschiedliche Bereiche des zweiten Maßstabes 32 abtasten. Über dem dritten Maßstab 34 befindet sich ein fünfter Abtaster A 5, der mit seiner optischen Achse gleich zum dritten A 3 und vierten Abtaster A 4 ausgerichtet ist. Der erste A 1 und zweite Abtaster A 2 schließen mit dem dritten A 3, vierten A 4 und fünften Abtaster A 5 einen Winkel von 90 Grad ein. Dabei liegen der erste A 1, dritte A 3 und fünfte Abtaster A 5 einerseits und der zweite A 2 und vierte Abtaster A 4 andererseits jeweils in einer Ebene.

Die genaue Lage des Positionierkörpers 36 gegenüber dem Bezugskörper 38 kann nun anhand der von den Abtastern ermittelten Abtastwerte bestimmt werden. Zur Bestimmung der X-Richtung eignen sich im Prinzip die Daten jedes der fünf Abtaster. Sie stimmen hinsichtlich der X-Richtung überein, so daß das Ergebnis eines beliebigen Abtasters verwendet werden. Hier werden die Abtaster A 1, A 3 und A 5 ausgewertet. Bei den nachfolgend beschriebenen Alternativen werden einmal die Werte aller dieser Abtaster A 1, A 3 und A 5 benötigt und ein andermal nur die Werte des Abtasters A 1. Man erhält die X-Koordinaten dann nach folgender Formel:

$$X_{01} = \frac{\Delta_1 * (Z1_1^2 - Z2_1^2)}{(Z1_1 - Z2_1)^2 + \Delta_1^2}.$$

$$X_{03} = \frac{\Delta_3 * (Z1_3^2 - Z2_3^2)}{(Z1_3 - Z2_3)^2 + \Delta_3^2}$$

$$X_{05} = \frac{\Delta_5 * (Z1_5^2 - Z2_5^2)}{(Z1_5 - Z2_5)^2 + \Delta_5^2}$$

Zur Bestimmung der Y-Richtung eignen sich die Daten der Abtaster A 1 und A 2. Sind der Positionierkörper 36 und der Bezugskörper 38 parallel ausgerichtet, so ergeben die Daten der beiden Abtaster A 1 und A 2 den gleichen Wert.

Bei Neigungen um die Z-Achse sind die Werte jedoch verschieden. Man erhält die Y-Koordinaten nach

6

folgender Formel:

$$Y_{01} = \frac{\Delta_1^2 * (Z1_1 + Z2_1)}{(Z1_1 - Z2_1)^2 + \Delta_1^2}$$

$$Y_{02} = \frac{\Delta_2^2 * (Z1_2 + Z2_2)}{(Z1_2 - Z2_2)^2 + \Delta_2^2}$$

Zur Bestimmung der Z-Richtung eignen sich die Daten der Abtaster A 3, A 4 und A 5. Sind der Positionierkörper 36 und der Bezugskörper 38 parallel ausgerichtet und auch nicht um die X-Achse verdreht, so ergeben die Daten der drei Abtaster A 3, A 4 und A 5 den gleichen Wert. Bei Neigungen um die Y-Achse und/oder um die X-Achse sind die Werte jedoch verschieden. Man erhält die Z-Koordinaten nach folgender Formel:

$$Z_{03} = \frac{\Delta_3^2 * (Z1_3 + Z2_3)}{(Z1_3 - Z2_3)^2 + \Delta_3^2}$$

$$Z_{04} = \frac{\Delta_4^2 * (Z1_4 + Z2_4)}{(Z1_4 - Z2_4)^2 + \Delta_4^2}$$

$$Z_{05} = \frac{\Delta_5^2 * (Z1_5 + Z2_5)}{(Z1_5 - Z2_5)^2 + \Delta_5^2}$$

Aus den berechneten Koordinaten können auch die Neigungswinkel berechnet werden. Für die Lage der Winkel gilt die im Zusammenhang mit Fig. 3 vorgenommenen Definitionen. Man erhält dann die Winkel nach folgenden Formeln:

$$f = \arctan \frac{Z_{04} - Z_{03}}{\delta_{43}}$$

$$æ = \arctan \frac{Y_{02} - Y_{01}}{\delta_{21}}$$

oder auch

$$æ = \arctan \frac{X_{05} - X_{03}}{\delta_{53}}$$

$$\omega = \arctan \frac{Z_{05} - Z_{03}}{\delta_{53}}$$

Fig. 6 zeigt schließlich noch ein Anwendungsbeispiel der Erfindung. Es handelt sich um eine Sonde 40 zur Abtastung von Konturen. Die Sonde 40 umfaßt einen Bezugskörper 38, der das Gehäuse der Sonde 40 bildet und optische Abtaster A 1...A 5 trägt. Innerhalb des Bezugskörpers 38 befindet sich ein Positionierkörper 36, der mit Maßstäben 30, 32, 34 versehen ist, an einem Ende schwenk-, verschieb- und drehbeweglich im Bezugskörper 38 eingespannt ist und am anderen Ende eine Tastkugel 42 trägt, die bei Meßvorgängen entlang der Testoberfläche gleitet und dabei entsprechende Auslenkungen und/oder Stauchungen erfährt. Aus diesen Auslenkungen und/oder Stauchungen kann dann unter Anwendung der vorstehenden Formeln eine Reihe von Meßwerten ermittelt werden, die die Wiedergabe der Oberflächenkontur ermöglichen.

## Patentansprüche

1. Verfahren zur Lagebestimmung eines Positionierkörpers (36) relativ zu einem Bezugskörper (38), wobei der Positionierkörper oder der Bezugskörper einen ersten Maßstab mit Marken konstanten Abstandes trägt und der Bezugskörper bzw. der Positionierkörper einen ersten Abtaster aufweist, der über eine Auswertung der Marken und über die Projektionswinkel zwischen einem ersten Abtasterortspunkt und wenigstens drei auf dem Maßstab angeordneter Marken die Koordinaten des ersten Abtasterortspunktes nach trigonometrischen Funktionen berechnet, dadurch gekennzeichnet, daß auch die Koordinaten des Abtasterortspunktes wenigstens eines weiteren Abtasters, der im Abstand zum ersten Abtaster angeordnet ist, berechnet werden und daß alle Koordinaten der Abtasterortspunkte der Abtaster unter Berücksichtigung ihrer Abstände gemeinsam ausgewertet werden.

2. Verfahren nach Anspruch 1, dadurch gekennzeichnet, daß die auszuwertenden Marken und Projektionswinkel von Abtastern mit gleich ausgerichteten optischen Achsen bestimmt werden.

3. Verfahren nach Anspruch 2, dadurch gekennzeichnet, daß die auszuwertenden Marken und Projektionswinkel von insgesamt zwei Abtastern ausgewertet werden, die beide demselben Maßstab zugeordnet sind.

4. Verfahren nach Anspruch 1 oder 2, dadurch gekennzeichnet, daß die auf einem weiteren, zum ersten Maßstab parallel ausgerichteten Maßstab befindlichen Marken ausgewertet werden.

5. Verfahren nach Anspruch 4, <u>dadurch gekennzeichnet</u>, daß die auszuwertenden Marken und Projektionswinkel von insgesamt zwei Abtastern ausgewertet werden, von denen jeder einem Maßstab zugeordnet ist.

6. Verfahren nach Anspruch 4, <u>dadurch gekennzeichnet</u>, daß die auszuwertenden Marken und Projektionswinkel von insgesamt drei Abtastern ausgewertet werden, von denen zwei dem ersten Maßstab und der dritte dem zweiten Maßstab zugeordnet sind.

7. Verfahren nach Anspruch 1, <u>dadurch gekennzeichnet</u>, daß die auszuwertenden Marken und Projektionswinkel von Abtastern mit unter einem Winkel von vorzugsweise 90 Grad ausgerichteten optischen Achsen bestimmt werden, wobei auch die auf einem weiteren unter einem Winkel von vorzugsweise 90 Grad zum ersten Maßstab ausgerichteten Maßstab befindlichen Marken ausgewertet werden.

8. Verfahren nach Anspruch 7, <u>dadurch gekennzeichnet</u>, daß die auszuwertenden Marken und Projektionswinkel von insgesamt zwei Abtastern ausgewertet werden, von denen jeder einem Maßstab zugeordnet ist.

9. Verfahren nach Anspruch 7, <u>dadurch gekennzeichnet</u>, daß die auszuwertenden Marken und Projektionswinkel von insgesamt drei Abtastern ausgewertet werden, von denen zwei dem ersten Maßstab und der dritte dem zweiten Maßstab zugeordnet sind.

10. Verfahren nach Anspruch 7, <u>dadurch gekennzeichnet</u>, daß die auszuwertenden Marken und Projektionswinkel von insgesamt vier Abtastern ausgewertet werden, von denen zwei dem ersten Maßstab und zwei weitere dem zweiten Maßstab zugeordnet sind.

11. Verfahren nach Anspruch 1, <u>dadurch gekennzeichnet</u>, daß die auf einem zweiten, zum ersten Maßstab parallel ausgerichteten Maßstab befindlichen Marken und die auf einem dritten, unter einem Winkel von vorzugsweise 90 Grad zum ersten Maßstab ausgerichteten Maßstab befindlichen Marken ausgewertet werden.

12. Verfahren nach Anspruch 11, <u>dadurch gekennzeichnet</u>, daß die auszuwertenden Marken und Projektionswinkel von insgesamt drei Abtastern ausgewertet werden, von denen jeder einem Maßstab zugeordnet ist und deren optische Achsen in einer Ebene liegen.

13. Verfahren nach Anspruch 11, <u>dadurch gekennzeichnet</u>, daß die auszuwertenden Marken und Projektionswinkel von insgesamt vier Abtastern ausgewertet werden, von denen zwei einem der parallelen Maßstäbe und die beiden anderen jeweils den übrigen Maßstäben zugeordnet sind.

14. Verfahren nach Anspruch 13, <u>dadurch gekennzeichnet</u>, daß die Berechnung nach folgenden trigonometrischen Funktionen bzw. Gleichungen durchgeführt wird:

$$X_{01} = \frac{\Delta_1 \ast (Z1_1{}^2 - Z2_1{}^2)}{(Z1_1 - Z2_1)^2 + \Delta_1{}^2}$$

$$X_{03} = \frac{\Delta_3 \ast (Z1_3{}^2 - Z2_3{}^2)}{(Z1_3 - Z2_3)^2 + \Delta_3{}^2}$$

$$X_{05} = \frac{\Delta_5 \ast (Z1_5{}^2 - Z2_5{}^2)}{(Z1_5 - Z2_5)^2 + \Delta_5{}^2}$$

$$Y_{01} = \frac{\Delta_1{}^2 \ast (Z1_1 + Z2_1)}{(Z1_1 - Z2_1)^2 + \Delta_1{}^2}$$

$$Z_{03} = \frac{\Delta_3{}^2 \ast (Z1_3 + Z2_3)}{(Z1_3 - Z2_3)^2 + \Delta_3{}^2}$$

$$Z_{04} = \frac{\Delta_4{}^2 \ast (Z1_4 + Z2_4)}{(Z1_4 - Z2_4)^2 + \Delta_4{}^2}$$

$$Z_{05} = \frac{\Delta_5{}^2 \ast (Z1_5 + Z2_5)}{(Z1_5 - Z2_5)^2 + \Delta_5{}^2}$$

$$f = \arctan \frac{Z_{04} - Z_{03}}{\delta_{43}}$$

$$\text{æ} = \arctan \frac{X_{05} - X_{03}}{\delta_{53}}$$

$$\omega = \arctan \frac{Z_{05} - Z_{03}}{\delta_{53}}$$

wobei die Indizes 1, 3, 4, 5 für den ersten, dritten, vierten und fünften Abtaster stehen, wobei

$$Z1_{1...5} = \frac{\Delta 1...5}{2 * \tan \alpha_{1...5}}$$

und

$$Z2_{1...5} = \frac{\Delta 1...5}{2 * \tan \beta_{1...5}}$$

sind, $\alpha$ den Projektionswinkel zwischen dem Abtasterortspunkt sowie einer ersten und einer zweiten Marke, $\beta$ den Projektionswinkel zwischen dem Abtasterortspunkt und der ersten oder zweiten sowie einer dritten Marke bezeichnet, $\Delta$ der Abstand zwischen zwei Marken ist, $X_{01}...5$, $Y_{01}$ und $Z_{03...5}$ die Koordinaten der Abtasterortspunkte der durch die Indizes angegebenen Abtaster relativ zum Maßstab sind, $f$ den Winkel um die Y-Achse, æ den Winkel um die Z-Achse, $\omega$ den Winkel um die X-Achse darstellen und $\delta$ den Abstand zwischen den Abtasterortspunkten der durch die Indizes angegebenen Abtaster bildet.

15. Verfahren nach Anspruch 11, <u>dadurch gekennzeichnet</u>, daß die auszuwertenden Marken und Projektionswinkel von insgesamt fünf Abtastern ausgewertet werden, von denen der erste und zweite, der dritte und vierte sowie der dritte und fünfte mit ihren optischen Achsen gleich und der erste und zweite gegenüber dem dritten, vierten und fünften mit ihren optischen Achsen in einem Winkel von vorzugsweise 90 Grad ausgerichtet sind und von denen die Abtaster, deren optischen Achsen in einem Winkel ausgerichtet sind, jeweils in einer Ebene liegen, und daß ein dritter Maßstab vorgesehen ist, der parallel zum ersten oder zum zweiten Maßstab ausgerichtet ist.

16. Verfahren nach Anspruch 15, <u>dadurch gekennzeichnet</u>, daß die Berechnung nach folgenden trigonometrischen Funktionen bzw. Gleichungen durchgeführt wird:

$$X_{01} = \frac{\Delta_1 * (Z1_1^2 - Z2_1^2)}{(Z1_1 - Z2_1)^2 + \Delta_1^2}$$

$$Y_{01} = \frac{\Delta_1^2 * (Z1_1 + Z2_1)}{(Z1_1 - Z2_1)^2 + \Delta_1^2}$$

$$Y_{02} = \frac{\Delta_2^2 * (Z1_2 + Z2_2)}{(Z1_2 - Z2_2)^2 + \Delta_2^2}$$

$$Z_{03} = \frac{\Delta_3^2 * (Z1_3 + Z2_3)}{(Z1_3 - Z2_3)^2 + \Delta_3^2}$$

$$Z_{04} = \frac{\Delta_4^2 * (Z1_4 + Z2_4)}{(Z1_4 - Z2_4)^2 + \Delta_4^2}$$

$$Z_{05} = \frac{\Delta_5^2 * (Z1_5 + Z2_5)}{(Z1_5 - Z2_5)^2 + \Delta_5^2}$$

$$f = \arctan \frac{Z_{04} - Z_{03}}{\delta_{43}}$$

$$\text{æ} = \arctan \frac{Y_{02} - Y_{01}}{\delta_{21}}$$

$$\omega = \arctan \frac{Z_{05} - Z_{03}}{\delta_{53}}$$

wobei die Indizes 1, 2, 3, 4, 5 für den ersten, zweiten, dritten, vierten und fünften Abtaster stehen, wobei

$$Z1_{1...5} = \frac{\Delta 1...5}{2 * \tan \alpha_{1...5}}$$

und

$$Z2_{1...5} = \frac{\Delta 1...5}{2 * \tan \beta_{1...5}}$$

sind, $\alpha$ den Projektionswinkel zwischen dem Abtasterortspunkt sowie einer ersten und einer zweiten Marke, $\beta$ den Projektionswinkel zwischen dem Abtasterortspunkt und der ersten oder zweiten sowie einer dritten Marke bezeichnet, $\Delta$ der Abstand zwischen zwei Marken ist, $X_{01}$, $Y_{01...3}$ und $Z_{03...5}$ die Koordinaten der Abtasterortspunkte der durch die Indizes angegebenen Abtaster relativ zum Maßstab sind, $f$ den Winkel um die Y-Achse, æ den Winkel um die Z-Achse, $\omega$ den Winkel um die X-Achse darstellen und $\delta$ den Abstand zwischen den Abtasterortspunkten der durch die Indizes angegebenen Abtaster bildet.

17. Verfahren nach Anspruch 14 oder 16, <u>dadurch gekennzeichnet</u>, daß die Projektionswinkel durch optische Abbildung der Marken auf einer Projektionsfläche und Abstandsmessung der Projektionsorte gewonnen werden und als Abtasterortspunkt das Projektionszentrum einer Abbildungsoptik gewählt wird.

18. Lagegeber zur Lagebestimmung eines Positionierkörpers (36) relativ zu einem Bezugskörper (38), wobei der Positionierkörper (36) oder der Bezugskörper (38) einen ersten Maßstab (30) mit Marken (14) konstanten Abstandes trägt und der Bezugskörper (38) bzw. der Positionierkörper (36) einen ersten Abtaster (10; A 1) aufweist, der mit einem Rechner (18) verbunden ist, wobei der Abtaster (10; A 1) eine Winkelmeßvorrichtung (20) umfaßt, mittels der die Projektionswinkel ($\alpha$, $\beta$) zwischen einem Abtasterortspunkt (O) und wenigstens drei auf dem Maßstab angeordneter Marken (a, b, c) bestimmt werden und wobei der Rechner (18) so gesteuert ist, daß er die Koordinaten des Abtasterortspunktes (o) über eine Auswertung der Marken (a, b, c) und über die Projektionswinkel ($\alpha$, $\beta$) nach trigonometrischen Funktionen berechnet, <u>dadurch gekennzeichnet</u>, daß der Bezugskörper (38) bzw. der Positionierkörper (36) wenigstens einen weiteren Abtaster (A 2) aufweist, der im Abstand ($\delta$) zum ersten Abtaster (A 1) angeordnet ist, und daß der Rechner (18) so steuerbar ist, daß alle Koordinaten der Abtasterortspunkte (O) der Abtaster (A 1, A 2...) berechenbar und unter Berücksichtigung ihrer Abstänte ($\delta$) gemeinsam auswertbar sind.

19. Lagegeber nach Anspruch 18, <u>dadurch gekennzeichnet</u>, daß die Abtaster (A 1, A 2) mit ihren optischen Achsen gleich ausgerichtet sind.

20. Lagegeber nach Anspruch 18 oder 19, <u>dadurch gekennzeichnet</u>, daß insgesamt zwei Abtaster (A 1, A 2) vorhanden sind, die beide demselben Maßstab (30) zugeordnet sind.

21. Lagegeber nach Anspruch 18 oder 19, <u>dadurch gekennzeichnet</u>, daß zwei parallele Maßstäbe (32, 34) vorgesehen sind.

22. Lagegeber nach Anspruch 21, <u>dadurch gekennzeichnet</u>, daß insgesamt zwei Abtaster (A 3, A 5) vorhanden sind, von denen jeder einem Maßstab (32, 34) zugeordnet ist.

23. Lagegeber nach Anspruch 21, <u>dadurch gekennzeichnet</u>, daß insgesamt drei Abtaster (A 3, A 4, A 5) vorhanden sind, von denen zwei (A 3, A 4) dem einen Maßstab (32) und der andere (A 5) dem weiteren Maßstab (34) zugeordnet sind.

24. Lagegeber nach Anspruch 18, <u>dadurch gekennzeichnet</u>, daß die Abtaster (A 1, A 3) mit ihren optischen Achsen in einem Winkel von vorzugsweise 90 Grad ausgerichtet sind und daß ein weiterer Maßstab (32) vorgesehen ist, der ebenfalls in einem Winkel von vorzugsweise 90 Grad zum ersten Maßstab (30) ausgerichtet ist.

25. Lagegeber nach Anspruch 24, <u>dadurch gekennzeichnet</u>, daß insgesamt zwei Abtaster (A 1, A 3) vorhanden sind, von denen jeder einem Maßstab (30, 32) zugeordnet ist.

26. Lagegeber nach Anspruch 24, <u>dadurch gekennzeichnet</u>, daß insgesamt drei Abtaster (A 1, A 2, A 3) vorhanden sind, von denen zwei (A 1, A 2) dem einen Maßstab (30) und einer (A 3) dem anderen Maßstab (32) zugeordnet sind.

27. Lagegeber nach Anspruch 24, <u>dadurch gekennzeichnet</u>, daß insgesamt vier Abtaster (A 1, A 2, A 3, A 4) vorhanden sind, von denen zwei (A 1, A 2) dem einen Maßstab (30) und zwei weitere (A 3, A 4) dem anderen Maßstab (32) zugeordnet sind.

28. Lagegeber nach Anspruch 18, <u>dadurch gekennzeichnet</u>, daß zwei parallele Maßstäbe (30, 32) und ein unter einem Winkel von vorzugsweise 90 Grad zu den parallelen Maßstäben (30, 32) ausgerichteter Maßstab (34) vorhanden sind.

29. Lagegeber nach Anspruch 28, <u>dadurch gekennzeichnet</u>, daß insgesamt drei Abtaster (A 1, A 3, A 5) vorhanden sind, von denen jeder einem Maßstab (30, 32, 34) zugeordnet ist.

**30.** Lagegeber nach Anspruch 28, <u>dadurch gekennzeichnet</u>, daß insgesamt vier Abtaster (A 1, A 3, A 5) vorhanden sind, von denen zwei (A 3, A 4) einem der parallele Maßstäbe (32) und die beiden anderen (A 1, A 5) jeweils den übrigen Maßstäben (30, 34) zugeordnet sind.

**31.** Lagegeber nach Anspruch 30, <u>dadurch gekennzeichnet</u>, daß im Rechner (18) als trigonometrische Funktionen folgende Funktionen oder Gleichungen verarbeitbar sind:

$$X_{01} = \frac{\Delta_1 * (Z1_1^2 - Z2_1^2)}{(Z1_1 - Z2_1)^2 + \Delta_1^2}$$

$$X_{03} = \frac{\Delta_3 * (Z1_3^2 - Z2_3^2)}{(Z1_3 - Z2_3)^2 + \Delta_3^2}$$

$$X_{05} = \frac{\Delta_5 * (Z1_5^2 - Z2_5^2)}{(Z1_5 - Z2_5)^2 + \Delta_5^2}$$

$$Y_{01} = \frac{\Delta_1^2 * (Z1_1 + Z2_1)}{(Z1_1 - Z2_1)^2 + \Delta_1^2}$$

$$Z_{03} = \frac{\Delta_3^2 * (Z1_3 + Z2_3)}{(Z1_3 - Z2_3)^2 + \Delta_3^2}$$

$$Z_{04} = \frac{\Delta_4^2 * (Z1_4 + Z2_4)}{(Z1_4 - Z2_4)^2 + \Delta_4^2}$$

$$Z_{05} = \frac{\Delta_5^2 * (Z1_5 + Z2_5)}{(Z1_5 - Z2_5)^2 + \Delta_5^2}$$

$$f = \arctan \frac{Z_{04} - Z_{03}}{\delta_{43}}$$

$$æ = \arctan \frac{X_{05} - X_{03}}{\delta_{53}}$$

$$\omega = \arctan \frac{Z_{05} - Z_{03}}{\delta_{53}}$$

wobei die Indizes 1, 3, 4, 5 für den ersten, dritten, vierten und fünften Abtaster stehen, wobei

$$Z1_{1...5} = \frac{\Delta 1...5}{2 * \tan \alpha_{1...5}}$$

und

$$Z2_{1...5} = \frac{\Delta 1...5}{2 * \tan \beta_{1...5}}$$

sind, $\alpha$ den Projektionswinkel zwischen dem Abtasterortspunkt sowie einer ersten und einer zweiten Marke, $\beta$ den Projektionswinkel zwischen dem Abtasterortspunkt und der ersten oder zweiten sowie einer dritten Marke bezeichnet, $\Delta$ der Abstand zwischen zwei Marken ist, $X_{01}...5$, $Y_{01}$ und $Z_{03...5}$ die Koordinaten der Abtasterortspunkte der durch die Indizes angegebenen Abtaster relativ zum Maßstab sind, $f$ den Winkel um die Y-Achse, $æ$ den Winkel um die Z-Achse, $\omega$ den Winkel um die X-Achse darstellen und $\delta$ den Abstand zwischen den Abtasterortspunkten der durch die Indizes angegebenen Abtaster bildet.

**32.** Lagegeber nach Anspruch 28, <u>dadurch gekennzeichnet</u>, daß insgesamt fünf Abtaster (A 1, A 2, A 3, A 4, A 5) vorgesehen sind, von denen der erste (A 1) und zweite (A 2), der dritte (A 3) und vierte (A 4) sowie der dritte (A 3) und fünfte (A 5) mit ihren optischen Achsen gleich und der erste (A 1) und zweite (A 2) gegenüber dem dritten (A 3), vierten (A 4) und fünften (A 5) mit ihren optischen Achsen in einem Winkel von vorzugsweise 90 Grad ausgerichtet sind und daß die Abtaster, deren optischen Achsen in einem Winkel ausgerichtet sind, jeweils in einer Ebene liegen, und daß ein dritter Maßstab (34) vorgesehen ist, der parallel zum ersten (30) oder zum zweiten Maßstab (30) ausgerichtet ist.

**33.** Lagegeber nach Anspruch 32, <u>dadurch gekennzeichnet</u>, daß im Rechner (18) als trigonometrische Funktionen folgende Funktionen oder Gleichungen verarbeitbar sind:

$$X_{01} = \frac{\Delta_1 * (Z1_1^2 - Z2_1^2)}{(Z1_1 - Z2_1)^2 + \Delta_1^2}$$

$$Y_{01} = \frac{\Delta_1^2 * (Z1_1 + Z2_1)}{(Z1_1 - Z2_1)^2 + \Delta_1^2}$$

$$Y_{02} = \frac{\Delta_2^2 * (Z1_2 + Z2_2)}{(Z1_2 - Z2_2)^2 + \Delta_2^2}$$

$$Z_{03} = \frac{\Delta_3{}^2 * (Z1_3 + Z2_3)}{(Z1_3 - Z2_3)^2 + \Delta_3{}^2}$$

$$Z_{04} = \frac{\Delta_4{}^2 * (Z1_4 + Z2_4)}{(Z1_4 - Z2_4)^2 + \Delta_4{}^2}$$

$$Z_{05} = \frac{\Delta_5{}^2 * (Z1_5 + Z2_5)}{(Z1_5 - Z2_5)^2 + \Delta_5{}^2}$$

$$f = \arctan \frac{Z_{04} - Z_{03}}{\delta_{43}}$$

$$æ = \arctan \frac{Y_{02} - Y_{01}}{\delta_{21}}$$

$$\omega = \arctan \frac{Z_{05} - Z_{03}}{\delta_{53}}$$

wobei die Indizes 1, 2, 3, 4, 5 für den ersten, zweiten, dritten, vierten und fünften Abtaster stehen, wobei

$$Z1_{1...5} = \frac{\Delta 1...5}{2 * \tan \alpha_{1...5}}$$

und

$$Z2_{1...5} = \frac{\Delta 1...5}{2 * \tan \beta_{1...5}}$$

sind, $\alpha$ den Projektionswinkel zwischen dem Abtasterortspunkt sowie einer ersten und einer zweiten Marke, $\beta$ den Projektionswinkel zwischen dem Abtasterortspunkt und der ersten oder zweiten sowie einer dritten Marke bezeichnet, $\Delta$ der Abstand zwischen zwei Marken ist, $X_{01}$, $Y_{01...3}$ und $Z_{03...5}$ die Koordinaten der Abtasterortspunkte der durch die Indizes angegebenen Abtaster relativ zum Maßstab sind, $f$ den Winkel um die Y-Achse, æ den Winkel um die Z-Achse, w den Winkel um die X-Achse darstellen und $\delta$ den Abstand zwischen den Abtasterortspunkten der durch die Indizes angegebenen Abtaster bildet.

34. Lagegeber nach einem oder mehreren der Ansprüche 18 bis 33, <u>dadurch gekennzeichnet</u>, daß die Abtaster (A 1, A 2, A 3, A 4, A 5) als optische Abtaster ausgebildet sind, die jeweils eine Abbildungsoptik (22) mit einer Projektionsfläche (24) und einer Abstandsmeßeinrichtung (26) umfassen, wobei die Abtasterortspunkte (O) durch die Projektionszentren der Abbildungsoptiken (22) gebildet sind.

35. Lagegeber nach Anspruch 34, <u>dadurch gekennzeichnet</u>, daß die Projektionsfläche (24) und die Abstandsmeßeinrichtung (26) durch ein Diodenarray, vorzugsweise einer CCD-Zeile, gebildet ist.

## Claims

1. Method of determining the position of a position-control element (36) relative to a reference body (38), wherein the position-control element or the reference body carries a first scale having marks at constant spacing and the reference body or the position-control element respectively comprises a first scanner which, from an evaluation of the marks and from the projection angles between a first scanner location point and at least three marks disposed on the scale, calculates the coordinates of the first scanner location point in accordance with trigonometrical functions, characterized in that in addition the coordinates of the scanner location point of at least one further scanner, which is disposed at a distance from the first scanner, are calculated and that all the coordinates of the scanner location points of the scanners are jointly evaluated, taking account of the distances between them.

2. Method according to Claim 1, characterized in that the marks and projection angles to be evaluated of scanners having optical axes with the same orientations are determined.

3. Method according to Claim 2, characterized in that the marks and projection angles to be evaluated of a total of two scanners, which are both associated with the same scale, are evaluated.

4. Method according to Claim 1 or 2, characterized in that the marks situated on a further scale, orientated parallel to the first scale, are evaluated.

5. Method according to Claim 4, characterized in that the marks and projection angles to be evaluated of a total of two scanners, each of which is associated with a scale, are evaluated.

6. Method according to Claim 4, characterized in that the marks and projection angles to be evaluated of a total of three scanners, two of which are associated with the first scale and the third with the second scale, are evaluated.

7. Method according to Claim 1, characterized in that the marks and projection angles to be evaluated of scanners having optical axes orientated at an angle of preferably 90 degrees are determined, the marks situated on a further scale, orientated at an angle of preferably 90 degrees to the first scale, also being evaluated.

8. Method according to Claim 7, characterized in that the marks and projection angles to be evaluated of a total of two scanners, each of which is associated with a scale, are evaluated.

9. Method according to Claim 7, characterized in that the marks and projection angles to be evaluated of a total of three scanners, of which two are associated with the first scale and the third with the second scale, are evaluated.

10. Method according to Claim 7, characterized in that the marks and projection angles to be evaluated of a total of four scanners, of which two are associated with the first scale and two further ones with the second scale, are evaluated.

11. Method according to Claim 1, characterized in that the marks situated on a second scale, aligned parallel to the first scale, and the marks situated on a third scale, aligned at an angle of preferably 90 degrees to the first scale, are evaluated.

12. Method according to Claim 11, characterized in that the marks and projection angles to be evaluated of a total of three scanners, each of which is associated with a scale and the optical axes of which lie in one plane, are evaluated.

13. Method according to Claim 11, characterized in that the marks and projection angles to be evaluated of a total of four scanners, of which two are associated with one of the parallel scales and the other two each with the remaining scales, are evaluated.

14. Method according to Claim 13, characterized in that the calculation is carried out in accordance with the following trigonometrical functions and equations respectively:

$$X_{01} = \frac{\Delta_1 * (Z1_1^2 - Z2_1^2)}{(Z1_1 - Z2_1)^2 + \Delta_1^2}$$

$$X_{03} = \frac{\Delta_3 * (Z1_3^2 - Z2_3^2)}{(Z1_3 - Z2_3)^2 + \Delta_3^2}$$

$$X_{05} = \frac{\Delta_5 * (Z1_5^2 - Z2_5^2)}{(Z1_5 - Z2_5)^2 + \Delta_5^2}$$

$$Y_{01} = \frac{\Delta_1^2 * (Z1_1 + Z2_1)}{(Z1_1 - Z2_1)^2 + \Delta_1^2}$$

$$Z_{03} = \frac{\Delta_3^2 * (Z1_3 + Z2_3)}{(Z1_3 - Z2_3)^2 + \Delta_3^2}$$

$$Z_{04} = \frac{\Delta_4^2 * (Z1_4 + Z2_4)}{(Z1_4 - Z2_4)^2 + \Delta_4^2}$$

$$Z_{05} = \frac{\Delta_5^2 * (Z1_5 + Z2_5)}{(Z1_5 - Z2_5)^2 + \Delta_5^2}$$

$$f = \tan^{-1}\frac{Z_{04} - Z_{03}}{\delta_{43}}$$

$$æ = \tan^{-1}\frac{X_{05} - X_{03}}{\delta_{53}}$$

$$\omega = \tan^{-1}\frac{Z_{05} - Z_{03}}{\delta_{53}}$$

where the indices 1, 3, 4, 5 stand for the first, third, fourth and fifth scanners, where

$$Z1_{1...5} = \frac{\Delta1...5}{2 * \tan \alpha_{1...5}}$$

and

$$Z2_{1...5} = \frac{\Delta 1...5}{2 * \tan \beta_{1...5}}$$

$\alpha$ denotes the projection angle between the scanner location point and a first and second mark, $\beta$ the projection angle between the scanner location point and the first or second and a third mark, $\Delta$ is the distance between two marks, $X_{01}...5$, $Y_{01}$ and $Z_{03...5}$ are the coordinates of the scanner location points of the scanners indicated by the indices relative to the scale, f denotes the angle about the Y-axis, æ the angle about the Z-axis, $\omega$ the angle about the X-axis and $\delta$ forms the distance between the scanner location points of the scanners indicated by the indices.

15. Method according to Claim 11, characterized in that the marks and projection angles to be evaluated of a total of five scanners are evaluated, of which the first and second, the third and fourth and also the third and fifth are aligned with their optical axes the same and the first and second with their optical axes at an angle of preferably 90 degrees with respect to the third, fourth and fifth, and of which the scanners, the optical axes of which are orientated at an angle, lie each in one plane, and that a third scale is provided which is orientated parallel to the first or to the second scale.

16. Method according to Claim 15, characterized in that the calculation is carried out in accordance with the following trigonometrical functions and equations respectively:

$$X_{01} = \frac{\Delta_1 * (Z1_1^2 - Z2_1^2)}{(Z1_1 - Z2_1)^2 + \Delta_1^2}$$

$$Y_{01} = \frac{\Delta_1^2 * (Z1_1 + Z2_1)}{(Z1_1 - Z2_1)^2 + \Delta_1^2}$$

$$Y_{02} = \frac{\Delta_2^2 * (Z1_2 + Z2_2)}{(Z1_2 - Z2_2)^2 + \Delta_2^2}$$

$$Z_{03} = \frac{\Delta_3^2 * (Z1_3 + Z2_3)}{(Z1_3 - Z2_3)^2 + \Delta_3^2}$$

$$Z_{04} = \frac{\Delta_4^2 * (Z1_4 + Z2_4)}{(Z1_4 - Z2_4)^2 + \Delta_4^2}$$

$$Z_{05} = \frac{\Delta_5^2 * (Z1_5 + Z2_5)}{(Z1_5 - Z2_5)^2 + \Delta_5^2}$$

$$f = \tan^{-1} \frac{Z_{04} - Z_{03}}{\delta_{43}}$$

$$æ = \tan^{-1} \frac{Y_{02} - Y_{01}}{\delta_{21}}$$

$$\omega = \tan^{-1} \frac{Z_{05} - Z_{03}}{\delta_{53}}$$

where the indices 1, 2, 3, 4, 5 stand for the first, second, third, fourth and fifth scanners, where

$$Z1_{1...5} = \frac{\Delta 1...5}{2 * \tan \alpha_{1...5}}$$

and

$$Z2_{1...5} = \frac{\Delta 1...5}{2 * \tan \beta_{1...5}}$$

$\alpha$ denotes the projection angle between the scanner location point and a first and a second mark, $\beta$ the projection angle between the scanner location point and the first or second and a third mark, $\Delta$ is the distance between two marks, $x_{01}$, $Y_{01...3}$ and $Z_{03...5}$ are the coordinates of the scanner location points of the scanners indicated by the indices relative to the scale, f denotes the angle about the Y-axis, æ the angle about the Z-axis, $\omega$ the angle about the X-axis, and $\delta$ forms the distance between the scanner location points of the scanners indicated by the indices.

17. Method according to Claim 14 or 16, characterized in that the projection angles are obtained by optical imaging of the marks on a projection surface and distance measurement of the projection locations and that the projection centre of an imaging optic is chosen as the scanner location point.

18. Position sensor for determining the position of a position-control element (36) relative to a reference body (38), wherein the position-control element (36) or the reference body (38) carries a first scale (30) having marks (14) at constant spacing and the reference body (38) or the position-control element (36) respectively comprises a first scanner (10; A 1), which is connected to a computer (18), wherein the scanner (10; A 1) comprises an angle measuring device (20), by means of which the projection angles ($\alpha$, $\beta$) between a scanner location point (0) and at least three marks (a, b, c) disposed on the scale are determined and wherein the computer (18) is so controlled that it calculates the coordinates of the scanner location point (O) by an evaluation of the marks (a, b, c) and by the projection angles ($\alpha$, $\beta$) in accordance with trigonometrical functions, characterized in that the reference body (38) or the position-control element (36) comprises at least one further scanner (A 2) which is disposed at a distance ($\delta$) from the first scanner (A 1), and that the computer (18) can be controlled in such a manner that all the coordinates of the scanner location points (0) of the scanners (A 1, A 2...) can be calculated and can be evaluated jointly taking into account their spacings ($\delta$).

19. Position sensor according to Claim 18, characterized in that the scanners (A 1, A 2) have their optical axes aligned in the same direction.

20. Position sensor according to Claim 18 or 19, characterized in that in total two scanners (A 1, A 2) are present, which are both associated with the same scale (30).

21. Position sensor according to Claim 18 or 19, characterized in that two parallel scales (32, 34) are provided.

22. Position sensor according to Claim 21, characterized in that in total two scanners (A 3, A 5) are present, each of which is associated with a scale (32, 34).

23. Position sensor according to Claim 21, characterized in that in total three scanners (A 3, A 4, A 5) are present, of which two (A 3, A 4) are associated with the one scale (32) and the other (A 5) is associated with the further scale (34).

24. Position sensor according to Claim 18, characterized in that the scanners (A 1, A 3) are orientated with their optical axes at an angle of preferably 90 degrees and that a further scale (32) is provided, which also is orientated at an angle of preferably 90 degrees to the first scale (30).

25. Position sensor according to Claim 24, characterized in that in total two scanners (A 1, A 3) are present, each of which is associated with one scale (30, 32).

26. Position sensor according to Claim 24, characterized in that in total three scanners (A 1, A 2, A 3) are present, of which two (A 1, A 2) are associated with the one scale (30) and one (A 3) with the other scale (32).

27. Position sensor according to Claim 24, characterized in that in total four scanners (A 1, A 2, A 3, A 4) are present, of which two (A 1, A 2) are associated with the one scale (30) and two others (A 3, A 4) with the other scale (32).

28. Position sensor according to Claim 18, characterized in that two parallel scales (30, 32) and one scale (34), orientated at an angle of preferably 90 degrees to the parallel scales (30, 32), are present.

29. Position sensor according to Claim 28, characterized in that in total three scanners (A 1, A 3, A 5) are present, each of which is associated with a scale (30, 32, 34).

30. Position sensor according to Claim 28, characterized in that in total four scanners (A 1, A 3, A 4, A 5) are present, of which two (A 3, A 4) are associated with one of the parallel scales (32) and the other two (A 1, A 5) are each associated with the other scales (30, 34).

31. Position sensor according to Claim 30, characterized in that the following functions or equations can be processed as trigonometrical functions in the computer (18):

$$X_{01} = \frac{\Delta_1 * (Z1_1^2 - Z2_1^2)}{(Z1_1 - Z2_1)^2 + \Delta_1^2}$$

$$X_{03} = \frac{\Delta_3 * (Z1_3^2 - Z2_3^2)}{(Z1_3 - Z2_3)^2 + \Delta_3^2}$$

$$X_{05} = \frac{\Delta_5 * (Z1_5^2 - Z2_5^2)}{(Z1_5 - Z2_5)^2 + \Delta_5^2}$$

$$Y_{01} = \frac{\Delta_1^2 * (Z1_1 + Z2_1)}{(Z1_1 - Z2_1)^2 + \Delta_1^2}$$

$$Z_{03} = \frac{\Delta_3^2 * (Z1_3 + Z2_3)}{(Z1_3 - Z2_3)^2 + \Delta_3^2}$$

$$Z_{04} = \frac{\Delta_4^2 * (Z1_4 + Z2_4)}{(Z1_4 - Z2_4)^2 + \Delta_4^2}$$

$$Z_{05} = \frac{\Delta_5^2 * (Z1_5 + Z2_5)}{(Z1_5 - Z2_5)^2 + \Delta_5^2}$$

$$f = \tan^{-1} \frac{Z_{04} - Z_{03}}{\delta_{43}}$$

$$\text{æ} = \tan^{-1} \frac{X_{05} - X_{03}}{\delta_{53}}$$

$$\omega = \tan^{-1} \frac{Z_{05} - Z_{03}}{\delta_{53}}$$

wherein the indices 1, 3, 4, 5 stand for the first, third, fourth and fifth scanners, where

$$Z1_{1...5} = \frac{\Delta 1...5}{2 * \tan \alpha_{1...5}}$$

and

$$Z2_{1...5} = \frac{\Delta 1...5}{2 * \tan \beta_{1...5}}$$

$\alpha$ denotes the projection angle between the scanner location point and a first and a second mark, $\beta$ denotes the projection angle between the scanner location point and the first or second and a third mark, $\Delta$ is the distance between two marks, $X_{01}...5$, $Y_{01}$ and $Z_{03...5}$ are the coordinates of the scanner location points of the scanners indicated by the indices relative to the scale, f represents the angle about the Y-axis, æ the angle about the Z-axis, $\omega$ the angle about the X-axis, and $\delta$ forms the distance between the scanner location points of the scanners indicated by the indices.

32. Position sensor according to Claim 28, characterized in that in total five scanners (A 1, A 2, A 3, A 4, A 5) are provided, of which the first (A 1) and second (A 2), the third (A 3) and fourth (A 4) and also the third (A 3) and fifth (A 5) are orientated with their optical axes the same and the first (A 1) and second (A 2) are orientated with their optical axes at an angle of preferably 90 degrees with respect to the third (A 3), fourth (A 4) and fifth (A 5), and that the scanners, the optical axes of which are orientated at an angle, each lie in a plane, and that a third scale (34) is provided, which is orientated parallel to the first (30) or to the second scale (30).

33. Position sensor according to Claim 32, characterized in that the following functions or equations can be evaluated as trigonometrical functions in the computer (18):

$$X_{01} = \frac{\Delta_1 * (Z1_1^2 - Z2_1^2)}{(Z1_1 - Z2_1)^2 + \Delta_1^2}$$

$$Y_{01} = \frac{\Delta_1^2 * (Z1_1 + Z2_1)}{(Z1_1 - Z2_1)^2 + \Delta_1^2}$$

$$Y_{02} = \frac{\Delta_2^2 * (Z1_2 + Z2_2)}{(Z1_2 - Z2_2)^2 + \Delta_2^2}$$

$$Z_{03} = \frac{\Delta_3^2 * (Z1_3 + Z2_3)}{(Z1_3 - Z2_3)^2 + \Delta_3^2}$$

$$Z_{04} = \frac{\Delta_4^2 * (Z1_4 + Z2_4)}{(Z1_4 - Z2_4)^2 + \Delta_4^2}$$

$$Z_{05} = \frac{\Delta_5^2 * (Z1_5 + Z2_5)}{(Z1_5 - Z2_5)^2 + \Delta_5^2}$$

$$f = \tan^{-1} \frac{Z_{04} - Z_{03}}{\delta_{43}}$$

$$\text{æ} = \tan^{-1} \frac{Y_{02} - Y_{01}}{\delta_{21}}$$

$$\omega = \tan^{-1} \frac{Z_{05} - Z_{03}}{\delta_{53}}$$

where the indices 1, 2, 3, 4, 5 stand for the first, second, third, fourth and fifth scanners where

$$Z1_{1...5} = \frac{\Delta 1...5}{2 * \tan \alpha_{1...5}}$$

and

$$Z2_{1...5} = \frac{\Delta 1...5}{2 * \tan \beta_{1...5}}$$

$\alpha$ denotes the projection angle between the scanner location point and a first and a second mark, $\beta$ the projection angle between the scanner location point and the first or second and a third mark, $\Delta$ is the distance between two marks, $X_{01}$, $Y_{01...3}$ and $Z_{03...5}$ are the coordinates of the scanner location points of the scanners indicated by the indices relative to the scale, f denotes the angle about the Y-axis, æ the angle about the Z-axis, w the angle about the X-axis and $\delta$ forms the distance between the scanner location points of the scanners indicated by the indices.

34. Position sensor according to one or more of Claims 18 to 33, characterized in that the scanners (A 1, A 2, A 3, A 4, A 5) are constructed as optical scanners, which each comprise an imaging optic (22) having a projection surface (24) and a distance measuring device (26), the scanner location points (O) being formed by the projection centres of the imaging optics (22).

35. Position sensor according to Claim 34, characterized in that the projection surface (24) and the distance measuring device (26) is formed by a diode array, preferably a CCD line.

## Revendications

1. Méthode de détermination de la position d'un corps de positionnement (36) par rapport à un corps de référence (38), le corps de positionnement ou le corps de référence portant une règle graduée avec des repères à distances constantes, et, le corps de référence ou le corps de positionnement présentant un premier analyseur qui calcule, par une évaluation des repères et par les angles de projection entre un premier point géométrique d'analyse et au moins trois repères sur la règle graduée, les coordonnées du premier point géométrique d'analyse par des fonctions trigonométriques, <u>caractérisée en ce que</u>, de plus, les coordonnées du point géométrique d'analyse d'au moins un autre analyseur, placé à distance du premier analyseur, sont calculées et en ce que toutes les coordonnées des points géométriques d'analyse des analyseurs sont évaluées, en commun, en tenant compte de leurs distances.

2. Méthode suivant la revendication 1, <u>caractérisée en ce que</u> les repères et les angles de projection à mesurer sont déterminés par des analyseurs dont les axes optiques sont orientés de manière identique.

3. Méthode suivant la revendication 2, <u>caractérisée en ce que</u> les repères et les angles de projection à mesurer sont évalués par deux analyseurs au total qui sont tous les deux associés à la même règle graduée.

4. Méthode suivant la revendication 1 ou 2, <u>caractérisée en ce qu'</u>on évalue les repères situés sur une autre règle graduée qui est parallèle à la première règle graduée.

5. Méthode suivant la revendication 4, <u>caractérisée en ce que</u> les repères et les angles de projection à mesurer sont évalués par deux analyseurs au total dont chacun est associé à une règle graduée.

6. Méthode suivant la revendication 4, <u>caractérisée en ce que</u> les repères et les angles de projection à mesurer sont évalués par trois analyseurs au total dont deux sont associés à la première règle graduée et le troisième à la seconde règle graduée.

7. Méthode suivant la revendication 1, <u>caractérisée en ce que</u> les repères et les angles de projection à mesurer sont déterminés par des analyseurs dont les axes optiques sont orientés de manière à former un angle de préférence de 90 degrés, les repères situés sur une autre règle graduée, orientée de manière à former un angle de préférence de 90 degrés avec la première règle graduée, étant également évalués.

8. Méthode suivant la revendication 7, <u>caractérisée en ce que</u> les repères et les angles de projection à mesurer sont évalués par deux analyseurs au total dont chacun est associé à une règle graduée.

9. Méthode suivant la revendication 7, caractérisée en ce que les repères et les angles de projection à mesurer sont évalués par trois analyseurs au total dont deux sont associés à la première règle graduée et le troisième à la seconde règle graduée.

10. Méthode suivant la revendication 7, caractérisée en ce que les repères et les angles de projection à mesurer sont évalués par quatres analyseurs au total dont deux sont associés à la première règle graduée et les deux autres à la seconde règle graduée.

11. Méthode suivant la revendication 1, caractérisée en ce qu'on évalue les repères situés sur une seconde règle graduée, orientée parallèlement à la première règle graduée et les repères situés sur une troisième règle graduée, orientée de manière à former un angle de préférence de 90 degrés avec la première règle graduée.

12. Méthode suivant la revendication 11, caractérisée en ce que les repères et les angles de projection à mesurer sont évalués par trois analyseurs au total dont chacun est associé à une règle graduée et dont les axes optiques se trouvent sur un même plan.

13. Méthode suivant la revendication 11, caractérisée en ce que les repères et les angles de projection à mesurer sont évalués par quatre analyseurs au total dont deux sont associés à une des règles graduées parallèles et les deux autres, respectivement, aux autres règles graduées.

14. Méthode suivant la revendication 13, caractérisée en ce que le calcul est effectué selon les fonctions ou équations trigonométriques suivantes:

$$X_{01} = \frac{\Delta1 * (Z1_1^2 - Z2_1^2)}{(Z1_1 - Z2_1)^2 + \Delta1^2}$$

$$X_{03} = \frac{\Delta3 * (Z1_3^2 - Z2_3^2)}{(Z1_3 - Z2_3)^2 + \Delta3^2}$$

$$X_{05} = \frac{\Delta5 * (Z1_5^2 - Z2_5^2)}{(Z1_5 - Z2_5)^2 + \Delta5^2}$$

$$Y_{01} = \frac{\Delta1^2 * (Z1_1 + Z2_1)}{(Z1_1 - Z2_1)^2 + \Delta1^2}$$

$$Z_{03} = \frac{\Delta3^2 * (Z1_3 + Z2_3)}{(Z1_3 - Z2_3)^2 + \Delta3^2}$$

$$Z_{04} = \frac{\Delta4^2 * (Z1_4 + Z2_4)}{(Z1_4 - Z2_4)^2 + \Delta4^2}$$

$$Z_{05} = \frac{\Delta5^2 * (Z1_5 + Z2_5)}{(Z1_5 - Z2_5)^2 + \Delta5^2}$$

$$f = \operatorname{arctg} \frac{Z_{04} - Z_{03}}{\delta43}$$

$$æ = \operatorname{arctg} \frac{X_{05} - X_{03}}{\delta53}$$

$$\omega = \operatorname{arctg} \frac{Z_{05} - Z_{03}}{\delta53}$$

les indices 1, 3, 4, 5 correspondant au premier, troisième, quatrième et cinquième analyseur,

$$Z1_{1...5} \text{ étant } \frac{\Delta1...5}{2 * \operatorname{tg} \alpha_{1...5}}$$

et

$$Z2_{1...5} \text{ étant } \frac{\Delta1...5}{2 * \operatorname{tg} \beta_{1...5}}$$

$\alpha$ désignant l'angle de projection entre le point géométrique d'analyse et un premier et un deuxième repère, $\beta$ désignant l'angle de projection entre le point géométrique d'analyse et le premier ou le deuxième repère ainsi qu'un troisième repère, $\Delta$ étant la distance entre deux repères, $X_{01...5}$, $Y_{01}$ et $Z_{03...5}$ étant les coordonnées des points géométriques d'analyse des analyseurs indiqués par les indices par rapport à la règle graduée, f étant l'angle formé avec l'axe Y, ae l'angle avec l'axe Z, $\omega$ l'angle avec l'axe X, et $\delta$ la distance entre les points géométriques d'analyse des analyseurs indiqués par les indices.

**15.** Méthode suivant la revendication 11, caractérisée en ce que les repères et les angles de projection à mesurer sont évalués par cinq analyseurs au total dont les axes optiques du premier et du second, du troisième et du quatrième, ainsi que du troisième et du cinquième analyseur sont orientés de manière identique et dont les axes optiques du premier et du second analyseur sont orientés de manière à former un angle de préférence de 90 degrés avec les axes optiques du troisième, quatrième et cinquième analyseur, dont les analyseurs dont les axes optiques sont orientés de manière à former un angle, se trouvent sur un même plan et, en ce qu'est prévue une troisième règle graduée orientée parallèlement à la première ou à la seconde règle graduée.

**16.** Méthode suivant la revendication 15, caractérisée en ce que le calcul est effectué selon les fonctions ou équations trigonométriques suivantes:

$$X_{01} = \frac{\Delta 1 * (Z1_1^2 - Z2_1^2)}{(Z1_1 - Z2_1)^2 + \Delta 1^2}$$

$$Y_{01} = \frac{\Delta 1^2 * (Z1_1 + Z2_1)}{(Z1_1 - Z2_1)^2 + \Delta 1^2}$$

$$Y_{02} = \frac{\Delta 2^2 * (Z1_2 + Z2_2)}{(Z1_2 - Z2_2)^2 + \Delta 2^2}$$

$$Z_{03} = \frac{\Delta 3^2 * (Z1_3 + Z2_3)}{(Z1_3 - Z2_3)^2 + \Delta 3^2}$$

$$Z_{04} = \frac{\Delta 4^2 * (Z1_4 + Z2_4)}{(Z1_4 - Z2_4)^2 + \Delta_4^2}$$

$$Z_{05} = \frac{\Delta 5^2 * (Z1_5 + Z2_5)}{(Z1_5 - Z2_5)^2 + \Delta 5^2}$$

$$f = \operatorname{arctg} \frac{Z_{04} - Z_{03}}{\delta 43}$$

$$ae = \operatorname{arctg} \frac{Y_{02} - Y_{01}}{\delta 21}$$

$$\omega = \operatorname{arctg} \frac{Z_{05} - Z_{03}}{\delta 53}$$

les indices 1, 2, 3, 4, 5 correspondant au premier, deuxième, troisième, quatrième et cinquième analyseur,

$$Z1_{1...5} \text{ étant } \frac{\Delta 1...5}{2 * \operatorname{tg} \alpha_{1...5}}$$

et

$$Z2_{1...5} \text{ étant } \frac{\Delta 1...5}{2 * \operatorname{tg} \beta_{1...5}}$$

$\alpha$ désignant l'angle de projection entre le point géométrique d'analyse ainsi qu'un premier et un second repère, $\beta$ désignant l'angle de projection entre le point géométrique d'analyse et le premier ou le second repère ainsi qu'un troisième repère, $\Delta$ étant la distance entre deux repères, $X_{01}$, $Y_{01...3}$ et $Z_{03...5}$ étant les coordonnées des points géométriques d'analyse des analyseurs indiqués par les indices par rapport à la règle graduée, f étant l'angle formé avec l'axe Y, ae l'angle formé avec l'axe z, $\omega$ l'angle formé avec l'axe X et $\delta$ la distance entre les points géométriques d'analyse des analyseurs indiqués par les indices.

**17.** Méthode suivant la revendication 14 ou 16, caractérisée en ce que les angles de projection sont obtenus par reproduction optique des repères sur une surface de projection et par mesure de la distance des points de projection et en ce que le centre de projection d'une optique de reproduction est choisi comme point géométrique d'analyse.

**18.** Capteur de position pour la détermination de la position d'un corps de positionnement (36) par rapport à un corps de référence (38), le corps de positionnement (36) ou le corps de référence (38) portant une première règle graduée avec des repères à distances constantes, le corps de référence (38) ou le corps de positionnement (36) présentant un premier analyseur (10; A 1) relié à un ordinateur, l'analyseur (10; A 1) comprenant un dispositif de mesure d'angle (20) par lequel sont déterminés les angles ($\alpha$, $\beta$) entre un point géométrique d'analyse (O) et au moins trois repères (a, b, c) sur la règle graduée, l'ordinateur (18) étant commandé de manière qu'il calcule les coordonnées du point géométrique d'analyse (O) par une évaluation des repères (a, b, c) et par les angles de projection ($\alpha$, $\beta$), selon des fonctions trigonométriques, caractérisé en ce que le corps de référence (38) ou le corps de positionnement (36) présente au moins un autre analyseur (A 2), situé à la distance ($\delta$) par rapport au premier analyseur (A 1) et en ce que l'ordinateur (18) peut être commandé de façon que toutes les coordonnées des points géométriques d'analyse (O) des analyseurs (A 1, A 2,...) puissent être calculées et évaluées ensemble en tenant compte de leurs distances (δ).

19. Capteur de position suivant la revendication 18, caractérisé en ce que les axes optiques des analyseurs (A 1, A 2) sont orientés de manière identique.

20. Capteur de position suivant la revendication 18 ou 19, caractérisé en ce qu'il y a au total deux analyseurs (A 1, A 2) qui sont tous les deux associés à la même règle graduée (30).

21. Capteur de position suivant la revendication 18 ou 19, caractérisé en ce que deux règles graduées (32, 34) prarallèles sont prévues.

22. Capteur de position suivant la revendication 21, caractérisé en ce qu'il y a au total deux analyseurs (A 3, A 5) dont chacun est associé à une règle graduée (32, 34).

23. Capteur de position suivant la revendication 21, caractérisé en ce qu'il y a au total trois analyseurs (A 3, A 4, A 5) dont deux (A 3, A 4) sont associés à l'une des règles graduées (32) et l'autre (A 5) à l'autre règle graduée (34).

24. Capteur de position suivant la revendication 18, caractérisé en ce que les axes optiques des analyseurs (A 1, A 3) forment un angle de préférence de 90 degrés et en ce qu'une autre règle graduée (32) est prévue qui forme avec la première règle graduée (30) également un angle de préférence égal à 90 degrés.

25. Capteur de position suivant la revendication 24, caractérisé en ce qu'il y a au total deux analyseurs (A 1, A 3) dont chacun est associé à une règle graduée (30, 32).

26. Capteur de position suivant la revendication 24, caractérisé en ce qu'il y a au total trois analyseurs (A 1, A 2, A 3) dont deux (A 1, A 2) sont associés à une des règles graduées (30) et l'autre (A 3) à l'autre règle graduée (32).

27. Capteur de position suivant la revendication 24, caractérisé en ce qu'il y a au total quatre analyseurs (A 1, A 2, A 3, A 4) dont deux (A 1, A 2) sont associés à l'une des règles graduées (30) et les deux autres (A 3, A 4) à l'autre règle graduée (32).

28. Capteur de position suivant la revendication 18, caractérisé en ce qu'il y a deux règles graduées parallèles (30, 32) et une règle graduée (34) orientée de manière à former un angle de préférence de 90 degrés avec les règles graduées parallèles (30, 32).

29. Capteur de position suivant la revendication 28, caractérisé en ce qu'il y a au total trois analyseurs (A 1, A 3, A 5) dont chacun est associé à respectivement une des règles graduées (30, 32, 34).

30. Capteur de position suivant la revendication 28, caractérisé en ce qu'il y a au total quatre analyseurs (A 1, A 2, A 4, A 5) dont deux (A 3, A 4) sont associés à l'une des règles graduées parallèles (32) et les deux autres (A 1, A 5) à respectivement une des autres règles graduées (30, 34).

31. Capteur de position suivant la revendication 30, caractérisé en ce que les fonctions ou équations suivantes peuvent être traitées par l'ordinateur (28) comme des fonctions trigonométriques:

$$X_{01} = \frac{\Delta 1 * (Z1_1^2 - Z2_1^2)}{(Z1_1 - Z2_1)^2 + \Delta 1^2}$$

$$X_{03} = \frac{\Delta 3 * (Z1_3^2 - Z2_3^2)}{(Z1_3 - Z2_3)^2 + \Delta 3^2}$$

$$X_{05} = \frac{\Delta 5 * (Z1_5^2 - Z2_5^2)}{(Z1_5 - Z2_5)^2 + \Delta 5^2}$$

$$Y_{01} = \frac{\Delta 1^2 * (Z1_1 + Z2_1)}{(Z1_1 - Z2_1)^2 + \Delta 1^2}$$

$$Z_{03} = \frac{\Delta 3^2 * (Z1_3 + Z2_3)}{(Z1_3 - Z2_3)^2 + \Delta 3^2}$$

$$Z_{04} = \frac{\Delta 4^{\,2} * (Z1_4 + Z2_4)}{(Z1_4 - Z2_4)^2 + \Delta 4^2}$$

$$Z_{05} = \frac{\Delta 5^2 * (Z1_5 + Z2_5)}{(Z1_5 - Z2_5)^2 + \Delta 5^2}$$

$$f = \text{arctg}\, \frac{Z_{04} - Z_{03}}{\delta 43}$$

$$ae = \text{arctg}\, \frac{X_{05} - X_{03}}{\delta 53}$$

$$\omega = \text{arctg}\, \frac{Z_{05} - Z_{03}}{\delta 53}$$

les indices 1, 3, 4, 5 correspondant au premier, troisième, quatrième et cinquième analyseur,

$$Z1_{1...5}\ \text{étant}\ \frac{\Delta 1...5}{2 * \text{tg}\alpha_{\,1...5}}$$

et

$$Z2_{1...5}\ \text{étant}\ \frac{\Delta 1...5}{2 * \text{tg}\,\beta_{1...5}}$$

$\alpha$ étant l'angle de projection entre le point géométrique d'analyse ainsi qu'un premier et un second repère, $\beta$ étant l'angle de projection entre le point géométrique d'analyse et le premier ou le deuxième ainsi qu'un troisième repère, $\Delta$ étant la distance entre deux repères, $X_{01...5}$, et $Y_{01}$ et $Z_{03...5}$ étant les coordonnées des points géométriques d'analyse des analyseurs indiqués par les indices, par rapport à la règle graduée, f représentant l'angle formé avec l'axe Y, ae l'angle formé avec l'axe Z, $\omega$ l'angle formé avec l'axe X et $\delta$ la distance entre les points géométriques d'analyse des analyseurs indiqués par les indices.

32. Capteur de position suivant la revendication 28, caractérisé en ce que sont prévus au total cinq analyseurs (A 1, A 2, A 3, A 4, A 5) dont les axes optiques du premier (A 1) et du deuxième (A 2), du troisième (A 3) et du quatrième (A 4) ainsi que du troisième (A 3) et du cinquième (A 5) sont orientés de manière identique et dont les axes optiques du premier (A 1) et du deuxième analyseur (A 2) forment un angle de préférence de 90° avec le troisième (A 3), le quatrième (A 4) et le cinquième analyseur (A 5) et en ce que les analyseurs dont les axes optiques forment un angle, se trouvent dans un même plan et en ce qu'est prévue une troisième règle graduée (34) orientée parallèlement à la première (30) ou à la seconde règle graduée (30).

33. Capteur suivant la revendication 32, caractérisé en ce que les fonctions ou équations suivantes peuvent être traitées par l'ordinateur comme des fonctions trigonométriques:

$$X_{01} = \frac{\Delta 1 * (Z1_1^{\,2} - Z2_1^{\,2})}{(Z1_1 - Z2_1)^2 + \Delta 1^2}$$

$$Y_{01} = \frac{\Delta 1^{\,2} * (Z1_1 + Z2_1)}{(Z1_1 - Z2_1)^2 + \Delta 1^2}$$

$$Y_{02} = \frac{\Delta 2^2 * (Z1_2 + Z2_2)}{(Z1_2 - Z2_2)^2 + \Delta 2^2}$$

$$Z_{03} = \frac{\Delta 3^2 * (Z1_3 + Z2_3)}{(Z1_3 - Z2_3)^2 + \Delta 3^2}$$

$$Z_{04} = \frac{\Delta 4^{\,2} * (Z1_4 + Z2_4)}{(Z1_4 - Z2_4)^2 + \Delta 4^2}$$

$$Z_{05} = \frac{\Delta 5^{\,2} * (Z1_5 + Z2_5)}{(Z1_5 - Z2_5)^2 + \Delta_5^{\,2}}$$

$$f = \text{arctg}\, \frac{Z_{04} - Z_{03}}{\delta 43}$$

$$ae = \text{arctg}\, \frac{Y_{02} - Y_{01}}{\delta 21}$$

$$\omega = \text{arctg}\, \frac{Z_{05} - Z_{03}}{\delta 53}$$

les indices 1, 2, 3, 4, 5 correspondant au premier, deuxième, troisième, quatrième et cinquième analyseur,

$$Z1_{1...5}\ \text{étant}\ \frac{\Delta 1...5}{2 * \text{tg}\,\alpha_{1...5}}$$

et

$$Z2_{1\ldots5} \text{ étant } \frac{\Delta1\ldots5}{2 * \text{tg } \beta_{1\ldots5}}$$

$\alpha$ étant l'angle de projection entre le point géométrique d'analyse ainsi qu'un premier et un deuxième repère, $\beta$ étant l'angle de projection entre le point géométrique d'analyse et le premier ou le deuxième ainsi qu'un troisième repère, $\Delta$ étant la distance entre deux repères, $X_{01}$, $Y_{01\ldots3}$ et $Z_{03\ldots5}$ étant les coordonnées des points géométriques d'analyse des analyseurs indiqués par les indices, par rapport à la règle graduée, f étant l'angle formé avec l'axe Y, ae l'angle formé avec l'axe Z, $\omega$ l'angle formé avec l'axe X et $\delta$ la distance entre les points géométriques d'analyse des analyseurs indiqués par les indices.

34. Capteur de position suivant une ou plusieurs des revendications 18 à 33, caractérisé en ce que les analyseurs (A 1, A 2, A 3, A 4, A 5) sont des analyseurs optiques qui comprennent chacun une optique de reproduction (22) avec une surface de projection (24) et un dispositif de mesure de distance, les points géométriques d'analyse (O) étant formés par les centres de projection des optiques de reproduction (22).

35. Capteur de position suivant la revendication 34, caractérisé en ce que la surface de projection (24) et le dispositif de mesure de distance (26) sont formés par un réseau de diodes, de préférence, par une rangée de CCD.

## Fig. 1

## Fig. 2

# Fig. 3

# Fig. 4

$$\varphi = \text{arc tan } \frac{z_4 - z_3}{\delta_{43}}$$

# Fig. 5

# Fig. 6